# FASCICULE DE BREVET EUROPEEN

(11) **EP 0 979 930 B1**
(45) Date de publication et mention de la délivrance du brevet: **27.02.2002**
(21) Numéro de dépôt: 99401984.2
(22) Date de dépôt: 04.08.1999
(51) Int. Cl.: F01N 7/18, F16L 55/033, F16F 1/387, F16F 15/08, B60K 13/04

(54) **Dispositif de liaison pour la suspension d'une ligne d'échappement d'un véhicule automobile**
Verbindungsvorrichtung der Aufhängung von Kraftfahrzeugauspuffanlagen
Connecting device for the suspension of an exhaust pipe of a motor vehicle

(30) Priorité: 13.08.1998 FR 9810404
(43) Date de publication de la demande: 16.02.2000
(73) Titulaire: Peugeot Citroen Automobiles SA, 92200 Neuilly sur Seine (FR)
(72) Inventeur: Chapelier, Ivan, 25460 Etupes (FR)
(74) Mandataire: Lanceplaine, Jean-Claude

(56) Documents cités:
- FR-A- 2 755 469
- GB-A- 1 366 265
- US-A- 2 308 969
- US-A- 4 550 795
- US-A- 4 746 104

## Description

La présente invention a pour objet un dispositif de liaison pour la suspension d'une ligne d'échappement au-dessous du plancher d'un véhicule automobile.

Les dispositifs de liaison pour la suspension d'une ligne d'échappement ont deux fonctions principales qui sont, d'une part, de garantir le positionnement de la ligne d'échappement au-dessous du véhicule avec des déplacements maximum admissibles qui doivent éviter tout contact avec l'environnement et, d'autre part, transformer les déplacements dynamiques de la ligne d'échappement en effort appliqué à la structure du véhicule.

Les dispositifs de liaison utilisés jusqu'à présent sont composés d'éléments en matériau élastomère ayant des formes plus ou moins complexes.

En effet, on connaît par exemple dans le FR-A-2 755 469, un dispositif de liaison qui comporte une armature supérieure reliée à la caisse du véhicule, une armature inférieure reliée à la ligne d'échappement et deux anneaux élastiques reliant lesdites armatures. Ces anneaux sont croisés et comportent chacun une bague à haut module d'élasticité et ils sont fixés l'un à l'autre en deux emplacements diamétralement opposés.

Ce type de dispositif de liaison est complexe à réaliser et il présente une raideur dynamique relativement importante quelle que soit la fréquence de fonctionnement.

De plus, la plupart des dispositifs de liaison utilisés jusqu'à présent ont la plus faible raideur avec une précharge nulle et se rigidifient quand la précharge augmente.

Le document US 23 089 691 décrit un dispositif de liaison pour la suspension d'une ligne d'échappement, composé d'une masse interne encandrée par une armature en boucle.

L'invention a pour but d'éviter ces inconvénients en proposant un dispositif de liaison simple à réaliser et qui permet d'optimiser la plage du filtrage en fonction de la charge statique moyenne supportée par ce dispositif de liaison.

L'invention a donc pour objet un dispositif de liaison pour la suspension d'une ligne d'échappement au-dessous du plancher d'un véhicule automobile, caractérisé en ce qu'il comprend une armature métallique en forme de boucle ouverte et deux masses internes en matériau élastomère disposées de part et d'autre de l'ouverture de la boucle et fixées entre la paroi ouverte et la paroi opposée fermée de ladite armature, l'une des masses étant reliée au plancher par un organe de liaison et l'autre desdites masses étant reliée à la ligne d'échappement par un organe de liaison.

Selon d'autres caractéristiques de l'invention:
- les masses en matériau élastomère comportent sur leurs faces libres une partie en saillie, les parties en saillie en regard desdites masses étant en butée l'une sur l'autre sous une pression déterminée,
- la pression de contact entre la partie en saillie des masses est réglable par augmentation ou réduction de la largeur de l'ouverture de l'armature,
- chaque masse comporte un orifice axial pour le passage de l'organe de liaison correspondant,
- la boucle formant l'armature présente une section transversale en forme de quadrilatère dont l'une des faces comporte ladite ouverture.

D'autres caractéristiques et avantages de l'invention apparaîtront à la lecture de la description qui va suivre, en se référant aux dessins annexés, sur lesquels:
- la figure 1 est une vue schématique en perspective d'un dispositif de liaison conforme à l'invention,
- la figure 2 est une vue en coupe transversale du dispositif de liaison conforme à l'invention,
- la figure 3 est une courbe montrant la raideur dynamique idéale en fonction de la précharge appliquée au dispositif de liaison.

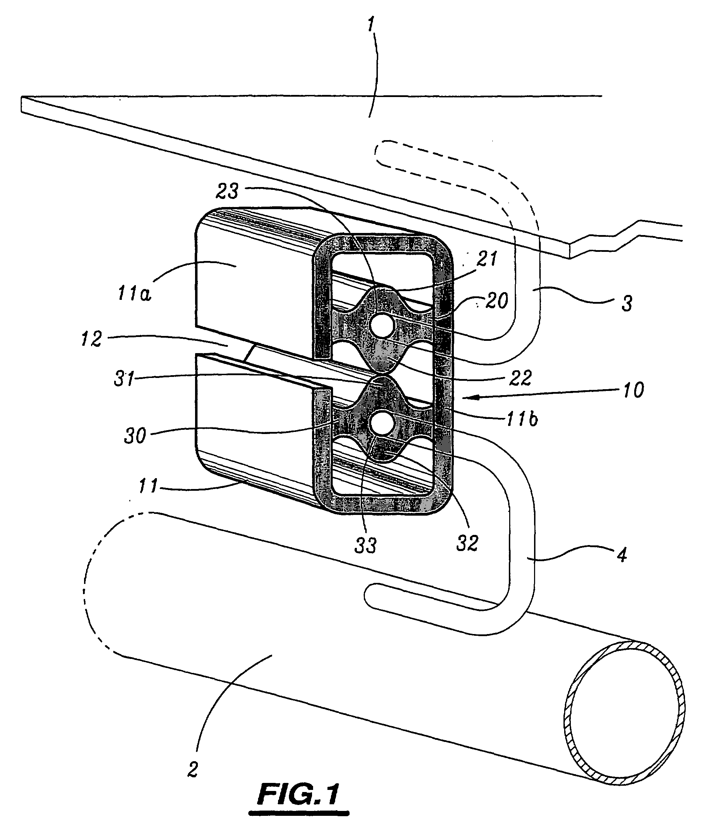

Sur la figure 1, on a représenté schématiquement un plancher 1 d'un véhicule automobile et une portion d'une ligne d'échappement 2 reliée à intervalles réguliers audit plancher 1 par des dispositifs de liaison conformes à l'invention et désignés par la référence générale 10.

Ce dispositif de liaison 10 pour la suspension de la ligne d'échappement 2 au-dessous du plancher 1 comprend une armature métallique 11 en forme de boucle ouverte et deux masses internes en matériau élastomère, respectivement 20 et 30.

Dans l'exemple de réalisation représenté sur les figures, la boucle formant l'armature métallique 11 présente une section transversale en forme de quadrilatère dont l'une des faces comporte une ouverture 12.

Cette armature 11 peut avoir toute autre forme déterminant une boucle ouverte.

Les masses 20 et 30 en matériau élastomère sont disposées de part et d'autre de l'ouverture 12 et sont fixées entre la paroi ouverte 11a et la paroi opposée 11b fermée de ladite armature 11.

La masse 20 en matériau élastomère comporte sur chacune de ses faces libres une partie en saillie, respectivement 21 et 22,la partie en saillie 22 étant dirigée vers la masse 30 en matériau élastomère. Les parties en saillie 21 et 22 s'étendent ou non sur toute la longueur de la masse 20.

De même, la masse 30 en matériau élastomère comporte sur chacune de ses faces libres une partie en saillie respectivement 31 et 32, s'étendant ou non sur toute la longueur de ladite masse 30.

Les parties en saillie 22 et 31 des masses 20 et 30 sont en butée l'une sur l'autre sous une pression déterminée, comme on le verra ultérieurement.

La masse 20 en matériau élastomère comporte un orifice axial 23 pour le passage d'un organe de liaison formé par exemple par un crochet 3 dont une extrémité est fixée sur le plancher 1 par exemple par soudage et dont l'autre extrémité est disposée dans l'orifice 23 de ladite masse 20.

La masse 30 en matériau élastomère comporte également un orifice axial 33 pour le passage d'un organe de liaison constitué par exemple par un crochet 4 dont une extrémité est fixée sur la ligne d'échappement 2 par exemple par soudage et dont l'autre extrémité est disposée dans l'orifice 33 de ladite masse 30.

Ainsi, en disposant judicieusement des dispositifs de liaison 10, la ligne d'échappement 2 est suspendue au plancher 1 du véhicule en garantissant le positionnement de cette ligne 2 sous le véhicule avec des déplacements maximum admissibles qui évitent tout contact avec l'environnement et en transformant les déplacements dynamiques de cette ligne d'échappement 2 en efforts appliqués à la structure du véhicule.

L'objectif d'un bon dispositif de liaison est d'avoir une faible raideur sur une large bande de fréquence tout en limitant les battements de la ligne d'échappement.

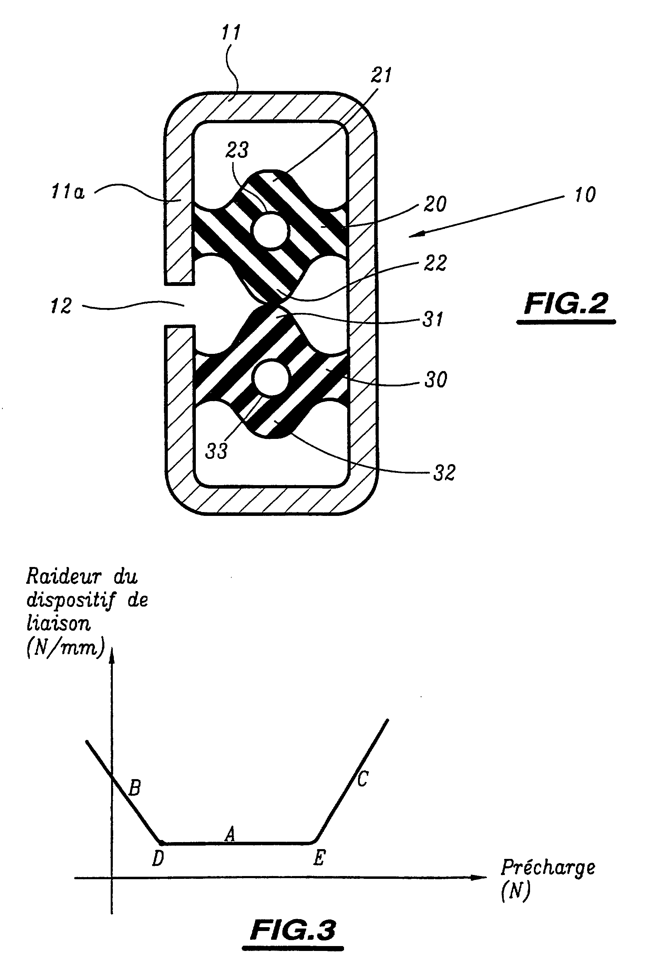

On peut ainsi définir une courbe représentant la raideur dynamique idéale en fonction de la précharge, comme indiquée à la figure 3.

Sur cette courbe, le repère A détermine la raideur dynamique faible centrée sur la précharge nominale que supportera le dispositif de liaison et les repères B et C déterminent la rigidification lors des déplacements exceptionnels pour limiter la course de la ligne d'échappement.

Avec le dispositif de liaison 10 conforme à l'invention, la limitation du débattement maximum est réalisée grâce à l'armature métallique 11 et la raideur constante entre les repères D et E (figure 3) se règle par la raideur en cisaillement des masses 20 et 30 en matériau élastomère.

Lors d'une traction élevée, les parties en saillie 21 et 32 respectivement des masses 20 et 30 entrent en contact avec l'armature 11 ce qui se traduit par une rigidification (repère C, figure 3).

La limitation du débattement en compression est obtenue lors du contact des parties en saillie 22 et 31 respectivement des masses 20 et 30 (repère B, figure 3).

Le positionnement de la butée d'attaque en traction (repère E, figure 3) est réglé grâce à l'espace entre l'armature 11 et les parties en saillie 21 et 32 respectivement des masses 20 et 30.

Le positionnement de la butée d'attaque en compression (repère D, figure 3) est réglé par la pression de contact entre les parties en saillie 22 et 31 respectivement des masses 20 et 30.

En effet, il faut que sans précharge les parties en relief 22 et 31 soient déjà en contact avec un effort déterminé.

Ce réglage est obtenu en moulant les masses 20 et 30 en matériau élastomère dans une armature 11 partiellement ouverte et en redressant ensuite cette armature 11 par déformation plastique du métal constituant ladite armature.

Ainsi, il est possible d'obtenir une contrainte résiduelle de compression entre les parties en saillie 22 et 31 respectivement des masses 20 et 30 et en réglant cette interférence, c'est-à-dire en réglant la largeur de l'ouverture 12 de l'armature 11 et il est possible de positionner la butée d'attaque en compression (repère D, figure 3) du dispositif de liaison 10.

Ce réglage permet d'optimiser la plage de filtrage en fonction de la charge statique moyenne supportée par le dispositif de liaison 10 et l'armature extérieure 11 constitue une masse filtrante.

Un des avantages du dispositif de liaison conforme à l'invention réside dans le fait que la raideur dynamique passe par une résonance et tend vers 0 quand la fréquence augmente ce qui permet d'obtenir un excellent filtrage aux moyennes et hautes fréquences.

Enfin, le dispositif de liaison conforme à l'invention est simple à réaliser et permet d'optimiser la plage de filtrage en fonction de la charge statique moyenne supportée par ce dispositif de liaison.

## Revendications

1. Dispositif de liaison pour la suspension d'une ligne d'échappement (2) au-dessous du plancher (1) d'un véhicule automobile, **caractérisé en ce qu'**il comprend une armature métallique (11) en forme de boucle ouverte et deux masses internes (20;30) en matériau élastomère disposées de part et d'autre de l'ouverture (12) de la boucle et fixées entre la paroi ouverte (11a) et la paroi fermée opposée (11b) de ladite armature (11), l'une (20) des masses étant reliée au plancher (1) par un organe de liaison (3) et l'autre (30) desdites masses étant reliée à la ligne d'échappement (2) par un organe de liaison (4).

2. Dispositif selon la revendication 1, **caractérisé en ce que** les masses (20;30) en matériau élastomère comportent chacune sur leurs faces libres une partie en saillie (21,22; 31, 32), les parties en saillie (22;31) en regard desdites masses (20;30) étant en butée l'une sur l'autre sous une pression déterminée.

3. Dispositif selon la revendication 2, **caractérisé en ce que** la pression de contact entre les parties en saillie (22;31) des masses (20;30) est réglable par augmentation ou réduction de la largeur de l'ouverture (12) de l'armature (11).

4. Dispositif selon l'une quelconque des revendications 1 à 3, **caractérisé en ce que** chaque masse (20;30) comporte un orifice axial (23;33)pour le passage de l'organe de liaison (3;4) correspondant.

5. Dispositif selon la revendication 1, **caractérisé en ce que** la boucle formant l'armature (11) présente une section transversale en forme de quadrilatère dont l'une des faces comporte ladite ouverture (12).

## Patentansprüche

1. Verbindungsvorrichtung für die Aufhängung einer Auspuffleitung (2) unter dem Boden (1) eines Kraftfahrzeugs, **dadurch gekennzeichnet, daß** sie eine Metallbewehrung (11) in Form eines offenen Rings und zwei Innenmassen (20; 30) aus Elastomermaterial, die beiderseits der Öffnung (12) des Rings angeordnet und zwischen der offenen Wand (11a) und der gegenüberliegenden geschlossenen Wand (11b) der Bewehrung (11) befestigt sind, aufweist, wobei die eine (20) der Massen mit dem Boden (1) durch eine Verbindungseinrichtung (3) und die andere (30) der Massen mit der Auspuffleitung (2) durch eine Verbindungseinrichtung (4) verbunden ist.

2. Vorrichtung nach Anspruch 1, dadurch gekennezeichnet, daß die Massen (20; 30) aus Elastomermaterial jeweils auf ihren freien Flächen einen vorspringenden Teil (21, 22; 31, 32) aufweisen, wobei die einander gegenüberstehenden vorspringenden Teile (22; 31) der Massen (20; 30) unter einem bestimmten Druck gegeneinander in Anlage sind.

3. Vorrichtung nach Anspruch 2, **dadurch gekennzeichnet, daß** der Berührdruck zwischen den vorspringenden Teilen (22; 31) der Massen (20; 30) durch Vergrößerung oder Verminderung der Breite der Öffnung (12) der Bewehrung (11) einstellbar ist.

4. Vorrichtung nach irgendeinem der Ansprüche 1 bis 3, **dadurch gekennzeichnet, daß** jede Masse (20; 30) eine axiale Öffnung (23; 33) für den Durchtritt der entsprechenden Verbindungseinrichtung (3; 4) aufweist.

5. Vorrichtung nach Anspruch 1, **dadurch gekennzeichnet, daß** der die Bewehrung (11) bildende Ring einen Querschnitt in Form eines Vierecks aufweist, bei welchem eine der Seiten die Öffnung (12) aufweist.

## Claims

1. Connecting device for the suspension of an exhaust pipe (2) below the floor (1) of a motor vehicle, **characterised in that** it comprises a metallic stirrup (11) in the form of an open loop and two internal masses (20; 30) of elastomeric material arranged to one side and the other of the gap (12) in the loop and attached between the open wall (11a) and the opposite, closed, wall (11b) of the said stirrup (11), one (20) of the masses being connected to the floor (1) by a linking member (3) and the other (30) of the said masses being connected to the exhaust pipe (2) by a linking member (4).

2. Device according to Claim 1, **characterised in that** the masses (20; 30) of elastomeric material each have on their free faces a projecting portion (21, 22; 31, 32), the projecting portions (22; 31) of the said masses (20; 30) which face one another being in engagement with one another under a predetermined pressure.

3. Device according to Claim 2, **characterised in that** the contact pressure between the projecting portions (22; 31) of the masses (20; 30) is adjustable by increasing or reducing the size of the gap (12) in the stirrup (11).

4. Device according to any one of Claims 1 to 3, **characterised in that** each mass (20; 30) has an axial opening (23; 33) to receive the associated linking member (3; 4).

5. Device according to Claim 1, **characterised in that** the loop forming the stirrup (11) has a transverse section of quadrilateral shape of which one of the faces contains the said gap (12).
